# EUROPEAN PATENT APPLICATION

(11) **EP 1 918 634 A1**
(43) Date of publication of application: **07.05.2008**
(21) Application number: 07020987.9
(22) Date of filing: 26.10.2007
(51) Int. Cl.: F21S 8/00, F21V 7/00

(54) **Device for providing lighting along a ground surface**

(30) Priority: 30.10.2006 NL 1032767
(71) Applicant: Spanninga Metaal B.V., 8501 MK Joure (NL)
(72) Inventor: Vellinga, Jacob, 8502 AL Joure (NL)
(74) Representative: Dohmen, Johannes Maria Gerardus

(57) **Abstract**

The present invention provides a device for providing lighting along a ground surface, comprising a light source (11) and at least one concave lateral reflector (13,14) disposed beside the light source (11) for reflecting light rays directly incident thereon from the light source (11) past said light source (11) so as to thus form a light beam of reflected light rays extending from said lateral reflector (13,14) at least substantially in horizontal direction along the ground surface, and a support (3) attached to the ground surface for positioning the light source (11) and said at least one lateral reflector (13,14) above the ground surface to be lit.

## Description

The present invention relates to a device for providing lighting along a ground surface. The invention in particular relates to providing lighting along paths and the like.

It is known to use lampposts as night lighting along motorways, bicycle paths and/or footpaths, for example. Such night lighting causes ecological damage, also referred to as light pollution. Said light pollution disturbs the biological day and night rhythm of people and animals and affects the growth of plants. Furthermore, said light pollution appears to interfere with astronomical observations. Because of the above drawbacks, more and more people want to have public lighting in rural areas removed completely. A drawback of such a measure would be that traffic safety would decrease, whilst in addition the social sense of security would be affected by such a measure.

Patent publication BE-A-1 014 501 discloses a lighting device also referred to as "downlight", which is used for accent lighting, which causes a specific object in a museum, for example, to stand out because it is lit in a special way. Inside the lighting device, light rays from a light source are reflected a large number of times before lighting the object in question.

German utility model DE 297 18 936 U1 describes marking lighting, in which use is made of a semicylindrical housing and a semicylindrical diffusor, both having an open bottom side.

The object of the present invention is to provide a device for providing lighting along a ground surface which might constitute an alternative in particular for the public lighting in rural areas by means of lampposts. In order to accomplish that object, the device according to the invention comprises a light source and at least one concave lateral reflector disposed beside the light source for reflecting light rays directly incident thereon from the light source past said light source so as to thus form a light beam of reflected light rays extending from said lateral reflector at least substantially in horizontal direction along the ground surface, and a support attached to the ground surface for positioning the light source and said at least one lateral reflector above the ground surface to be lit. Said at least one light beam which can be emitted by the device according to the invention is very suitable for use as a beacon, with the light beam being directed in the longitudinal direction of a road or a path. Road users will thus be able to see the course of the road far in advance, whilst the extent of light pollution can be minimised. The above phrase "at least substantially in horizontal direction" is to be understood to include in any case the situation in which the devices are used on an inclined ground surface and said at least one light beam is directed parallel to said inclined ground surface.

Quite preferably, the device is provided with two concave lateral reflectors disposed opposite each other on either side of the light source for reflecting light rays directly incident thereon from the light source in a direction towards each other so as to thus form two light beams of reflected light rays extending from the respective lateral reflectors at least substantially in two opposite, at least substantially horizontal directions along the ground surface. This enables the device according to the invention to perform the "beacon" function even better by emitting light beams in two opposite directions along a road or a path.

In particular when two opposite concave lateral reflectors according to the above-discussed preferred embodiments are used, it is furthermore preferable if said at least one lateral reflector is provided with holes for passing through part of the light rays directed to said at least one lateral reflector. Thus it is possible to actually have the light beams shine in horizontal direction, because the lateral reflectors are not in the way of said light beams, as it were. Reflected light rays can pass the holes to form a light beam beyond the lateral reflector in question.

In order to be able to indicate by means of colours on which side of a road/path the device is disposed in dependence on the direction in which a (road) user approaches the device, it is preferable if the device is provided with a coloured filter element for colouring one light beam.

Said at least one lateral reflector is preferably of the parabolic type, which makes it possible to create a parallel, slightly diverging or slightly converging light beam, which is advantageous from the viewpoint of the "beacon" function.

In addition to said at least one lateral reflector, the device according to the invention is preferably further provided with a concave main reflector on the side of the light source remote from the ground surface for reflecting light rays from the light source past the light source so as to thus form a vision beam of reflected light rays downwards onto the ground surface. The vision beam will thus contribute to marking a road or a path. In addition, at least part of the ground surface is also directly lighted, so that unevennesses therein, for example, will be better visible.

The main reflector is preferably so positioned relative to a light source and/or so configured that the vision beam is directed obliquely downwards to the ground surface. The direction of a light beam or a vision beam is determined by the central axis of the beam in question. Thus the device can be disposed beside a road or a path, and the extent of light pollution is furthermore reduced as much as possible.

A well-directed vision beam can be obtained in particular if the main reflector is of the parabolic type, in which case the main reflector is furthermore preferably built up of a number of contiguous parabolic segments and/or the main reflector is concave in two perpendicular planes.

Quite preferably, the light source comprises an LED, on the one hand because of the low energy consumption and comparatively low purchasing and operating costs thereof, and on the other hand because of the fact that the LED can be regarded as a pointed light source, so that also said at least one light beam from said at least one lateral reflector and the vision beam from the main reflector can be clearly defined.

Especially in combination with the preceding preferred embodiment, in which the light source comprises an LED, it is furthermore preferable if the device comprises a solar cell for supplying electric power to the light source, or at least to an electric accumulator connected to the light source. In this way it is no longer necessary to install electric power supply lines in the ground for supplying electric power to the light source.

The extent of light pollution is in particular reduced if the support is arranged for positioning the light source at a height of maximally 200 cm above the ground surface. Such a height is significantly lower than the comparable height when lampposts according to the prior art are used.

The support preferably comprises a post that can be attached to the ground, which attachment can be realised, for example, by driving the post into the ground.

In particular as an alternative to the use of holes according to a preferred embodiment as discussed in the foregoing, but possibly even in combination therewith, another preferred embodiment of a device according to the invention is characterised in that said at least one lateral reflector is of the partially light-transmitting type. In this connection a lateral reflector may be considered whose entire surface is so configured that said at least one reflector reflects only part of the light rays whilst transmitting another part of the light rays. According to another preferred embodiment it is alternatively also possible within the framework of the present invention that one part of the surface of said at least one lateral reflector reflects light rays and another part of the surface of said at least one lateral reflector transmits light rays.

In particular for use at locations where a number of roads/paths converge, for example at a junction or a crossing, it is preferable if the device is provided with at least three concave lateral reflectors so as to thus form at least three light beams of reflected light rays at least substantially in horizontal direction along the ground surface.

The invention further relates to a combination of a number of devices according to the invention as described in the foregoing, in which light beams from the devices are at least substantially aligned so as to mark a path. Such a path may be a bicycle path or a footpath, for example, along which devices according to the invention are positioned. Said path may be a rectilinear path or a curvilinear path.

The invention will be explained in more detail hereinafter by means of a description of a preferred embodiment of a device according to the invention.
Figure 1 schematically shows a path beside which a preferred embodiment of the device according to the invention is disposed;
Figure 2 shows a single device;
Figure 3 is a perspective view of the lighting head of the device according to the invention;
Figure 4 is a transparent side view of the lighting head; and
Figures 5a and 5b are sectional views along the lines A-A and B-B, respectively, in figure 4.

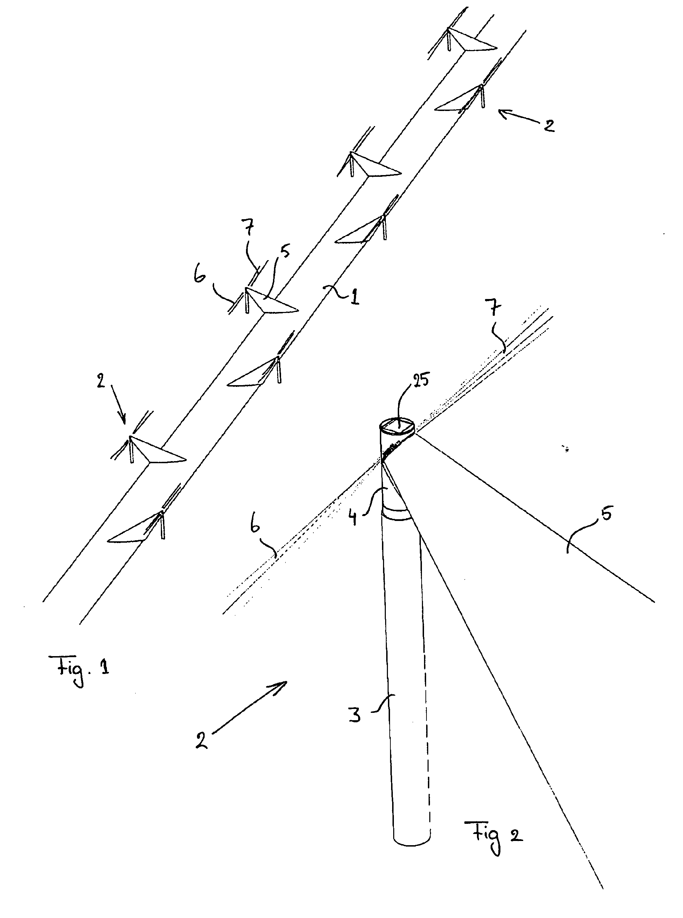

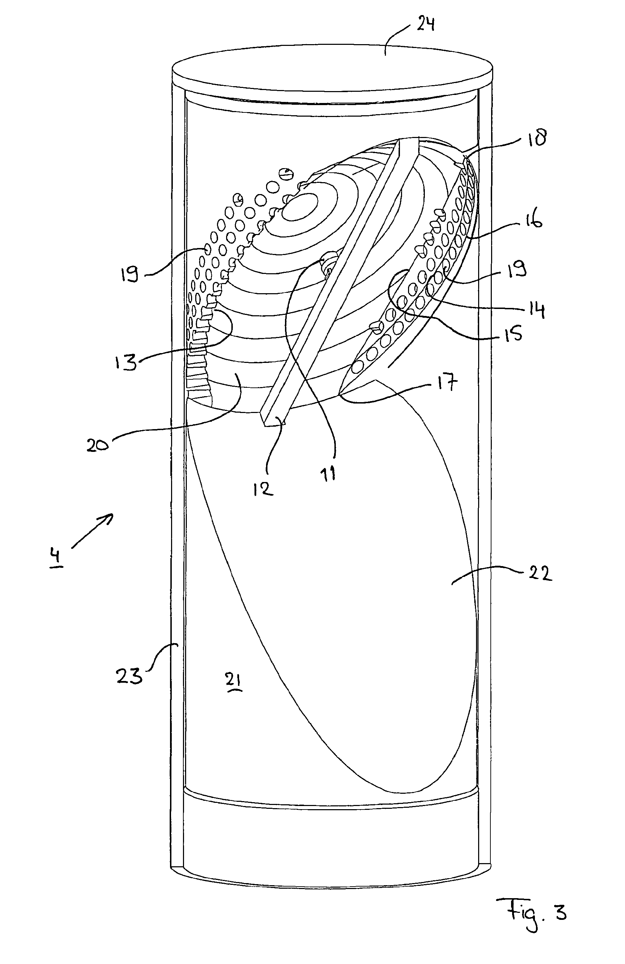

Figure 1 shows a path 1, such as a footpath or a bicycle path. Lighting posts 2 are disposed in diametrically opposite positions on either side of the path 1, which lighting posts each form a preferred embodiment of the device according to the invention.

Figure 2 shows the lighting post in more detail. The lighting post 2 is essentially built up of a support post 3 driven into the ground beside the path 1, on which a lighting head 4 is mounted, which lighting head will be explained in more detail yet with reference to the next figures. From the lighting head 4, a vision beam 5 is emitted obliquely downwards onto the path 1, as are two light beams 6, 7 directed in opposite directions, which light beams 6, 7 are each oriented at least substantially horizontally and parallel to the path 1. As a result, people who use the path 1 during the night can easily see the light beams 6, 7 from a comparatively large distance, whilst the light pollution caused by the light beams 6, 7 is minimal. The same applies to the vision beam 5, because of the specific direction of this vision beam on the one hand and the limited height of the lighting posts 2 on the other hand. A typical suitable height of the lighting posts 2 is such that the light source 11 (yet to be discussed) therein will be positioned at a height of about 100 cm above the level of the path 1.

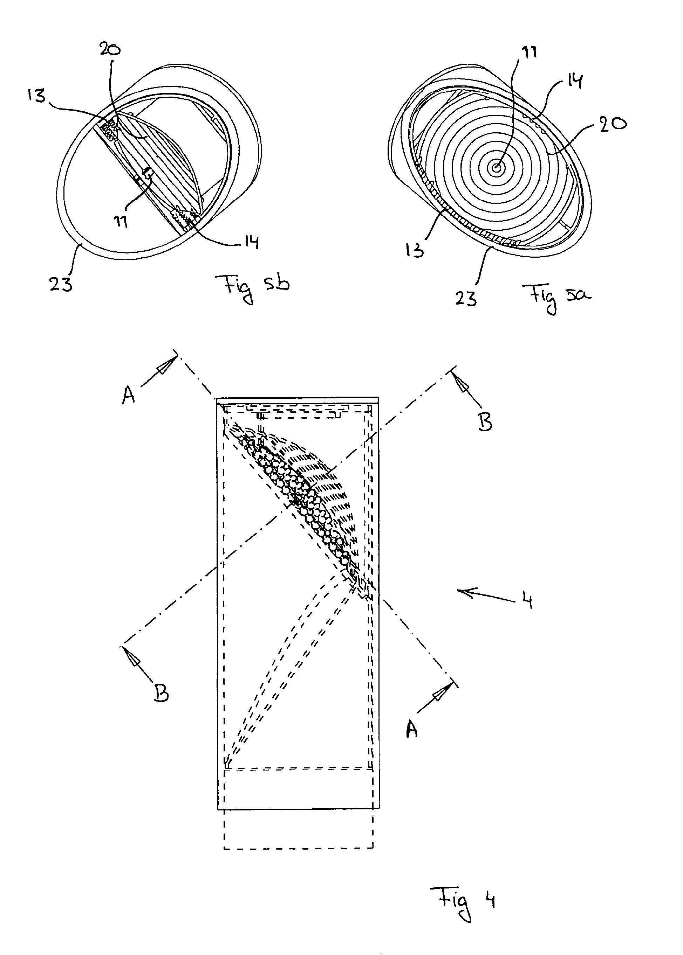

Figures 3-5b show various views of the lighting head 4. The lighting head 4 comprises an LED 11 as the light source, which is mounted to an inclined bar-like LED holder 12. The LED 11 thus has an upwardly inclined orientation, with the central axis of the light rays emitted by the LED 11 being directed obliquely upwards away from the path 1. Lateral reflectors 13, 14 are provided at the front side and the rear side, seen in the longitudinal direction of the path 1. The LED 11 is positioned between the lateral reflectors 13, 14. The lateral reflectors are concave, with the concave longitudinal edges 15, 16 (only shown for the lateral reflector 14 in figure 3) converging into points 17, 18, so that the shape of the lateral reflectors 13, 14 can be compared to that of a piece of orange peel. The lateral reflectors 13, 14 are provided with rows of holes 19.

The light rays from the LED 11 directed sideways in the longitudinal direction of the path 1 will be reflected by the concave lateral reflectors 13, 14, as a result of which the reflected light rays will be directed at least substantially parallel to each other to the other one of the lateral reflectors 13, 14. A significant part of the reflected light rays will pass through the holes 19 of the other lateral reflector 13, 14 and form the respective light beams 6, 7 beyond the lateral reflector 13, 14.

In an alternative embodiment it would also be possible to leave out the holes 19 and use lateral reflectors 13, 14 of the partially light-transmitting type instead. It is conceivable in that connection not to use a reflective surface at the locations where the holes 19 are shown in figure 3, but rather make said parts transparent, which can be realised by providing a reflective layer, for example by means of a suitable vapour deposition process. It is also possible to make the reflector area both reflective as well as transparent over the entire area thereof.

In addition to the lateral reflectors 13, 14, the lighting head 4 further comprises a concave, dish-shaped main reflector 20 positioned directly opposite the LED 11. The main reflector 20 is of the parabolic type or is at least built up of a number of parabolic segments, which blend together almost seamlessly. Reflection of light rays from the LED 11 by the main reflector 20 leads to the formation of the vision beam 5. Within the framework of the present invention, the use of the main reflector 20 is to be considered optional.

The lighting head 4 further comprises a housing 21, via which the LED holder 12 with the LED 11, the lateral reflectors 13, 14 and the main reflector 20 are connected to the support post 3. The shape of the housing 21 with the concave side 22 is such that it does not disturb the vision beam 5, or at least that the shape of the vision beam 5 is thus optimally geared to its function.

The lighting head 4 further comprises a transparent cylindrical window 23 at the outer side, which functions to protect the interior of the lighting head 4, as well as a transparent cover 24. A solar cell 25 is provided under said cover 24 (see figure 2) for supplying electric power to the LED 11 via an electric accumulator (not shown), which is likewise accommodated in the lighting head 4. The solar cell 25 can also function as a light sensor for controlling electronics for turning the LED 11 on and off. Detections made by the solar cell 25 can also be used for controlling the extent to which electric power is to be supplied to the LED by the electric accumulator.

Various variants to the preferred embodiment described in the foregoing are possible within the scope of the present invention. Thus it is possible, for example, to use four lateral reflectors instead of two, which reflectors are arranged in a horizontal plane, each in a quadrant, around an upwardly directed light source. In this way four light beams are formed, which extend in the direction of the paths that converge at a crossing.

## Claims

1. A device for providing lighting along a ground surface, comprising a light source and at least one concave lateral reflector disposed beside the light source for reflecting light rays directly incident thereon from the light source past said light source so as to thus form a light beam of reflected light rays extending from said lateral reflector at least substantially in horizontal direction along the ground surface, and a support attached to the ground surface for positioning the light source and said at least one lateral reflector above the ground surface to be lit.

2. A device according to claim 1, **characterised in that** the device is provided with two concave lateral reflectors disposed opposite each other on either side of the light source for reflecting light rays directly incident thereon from the light source in a direction towards each other so as to thus form two light beams of reflected light rays extending from the respective lateral reflectors at least substantially in two opposite, at least substantially horizontal directions along the ground surface.

3. A device according to claim 1 or 2, **characterised in that** said at least one lateral reflector is provided with holes for passing through part of the light rays directed at said at least one lateral reflector.

4. A device according to claim 1, 2 or 3, **characterised in that** the device is provided with a coloured filter element for colouring one light beam.

5. A device according to any one of the claims 1-4, **characterised in that** said at least one lateral reflector is of the parabolic type.

6. A device according to any one of the preceding claims, **characterised in that** a concave main reflector is provided on the side of the light source remote from the ground surface for reflecting light rays from the light source past the light source so as to thus form a vision beam of reflected light rays downwards onto the ground surface.

7. A device according to claim 6, **characterised in that** the main reflector is so positioned relative to a light source and/or so configured that the vision beam is directed obliquely downwards to the ground surface.

8. A device according to claim 6 or 7, **characterised in that** the main reflector is of the parabolic type.

9. A device according to claim 6, 7 or 8, **characterised in that** the main reflector is built up of a number of contiguous parabolic segments.

10. A device according to any one of the claims 6-9, **characterised in that** the main reflector is concave in two perpendicular planes.

11. A device according to any one of the preceding claims, **characterised in that** the light source comprises an LED.

12. A device according to any one of the preceding claims, **characterised in that** the device comprises a solar cell for supplying electric power to the light source.

13. A device according to any one of the preceding claims, **characterised in that** the support is arranged for positioning the light source at a height of maximally 200 cm above the ground surface.

14. A device according to any one of the preceding claims, **characterised in that** the support comprises a post that can be attached to the ground surface.

15. A device according to any one of the preceding claims, **characterised in that** said at least one lateral reflector is of the partially light-transmitting type.

16. A device according to claim 15, **characterised in that** one part of the surface of said at least one lateral reflector reflects light rays and another part of the surface of said at least one lateral reflector transmits light rays.

17. A device according to any one of the preceding claims, **characterised in that** the device is provided with at least three concave lateral reflectors so as to thus form at least three light beams of reflected light rays at least substantially in horizontal direction along the ground surface.

18. A combination of a number of devices according to any one of the preceding claims, wherein light beams from the devices are at least substantially in line so as to mark a path.
